Europäisches Patentamt

European Patent Office

Office européen des brevets

(19)

(11) Numéro de publication: **0 245 152 B1**

(12) **FASCICULE DE BREVET EUROPEEN**

(45) Date de publication de fascicule du brevet:
24.07.91

(51) Int. Cl.⁵: **G06F 15/332**, G06F 11/16

(21) Numéro de dépôt: **87400956.6**

(22) Date de dépôt: **24.04.87**

(54) **Processeur de calcul de la transformée de Fourier discrète comportant un dispositif de test en ligne.**

(30) Priorité: **06.05.86 FR 8606544**

(43) Date de publication de la demande:
**11.11.87 Bulletin 87/46**

(45) Mention de la délivrance du brevet:
**24.07.91 Bulletin 91/30**

(84) Etats contractants désignés:
**DE FR GB IT NL SE**

(56) Documents cités:
**EP-A- 0 171 305**
**FR-A- 2 572 820**

**IEEE TRANSACTIONS ON COMPUTERS, vol. C-24, no. 12, décembre 1975, pages 1202-1211, New York, US; R. DE MORI et al.: "A special-purpose computer for digital signal processing"**

**PATENT ABSTRACTS OF JAPAN, vol. 9, no. 116 (P-357)[1839], 21 mai 1985; & JP-A-60 3754 (NIPPON DENKI K.K.) 10-01-1985**

(73) Titulaire: **THOMSON-CSF**
**51, Esplanade du Général de Gaulle**
**F-92800 Puteaux(FR)**

(72) Inventeur: **Du Chene, Arnaud**
**THOMSON-CSF SCPI 19, avenue de Messine**
**F-75008 Paris(FR)**
Inventeur: **Dias, Bernard**
**THOMSON-CSF SCPI 19, avenue de Messine**
**F-75008 Paris(FR)**
Inventeur: **Bergeon, Gérard**
**THOMSON-CSF SCPI 19, avenue de Messine**
**F-75008 Paris(FR)**

(74) Mandataire: **Benoit, Monique et al**
**THOMSON-CSF SCPI**
**F-92045 PARIS LA DEFENSE CEDEX 67(FR)**

## Description

L'invention a principalement pour objet un processeur de calcul de la transformée de Fourier discrète comportant un dispositif de test en ligne.

La transformée de Fourier est un outil mathématique extrêmement puissant utilisé notamment pour calculer des spectres.

La transformée de Fourier permet notamment de calculer le produit de convolution. En effet la transformée de Fourier du produit de convolution de deux fonctions est égale au produit de transformée de Fourier de ces deux fonctions. Ainsi, en chaque point le produit de convolution de deux fonctions est égal à la transformée de Fourier inverse du produit des transformées de Fourier de ces deux fonctions.

Il est par ailleurs souvent avantageux de pondérer une fonction dont on désire calculer la transformée de Fourier.

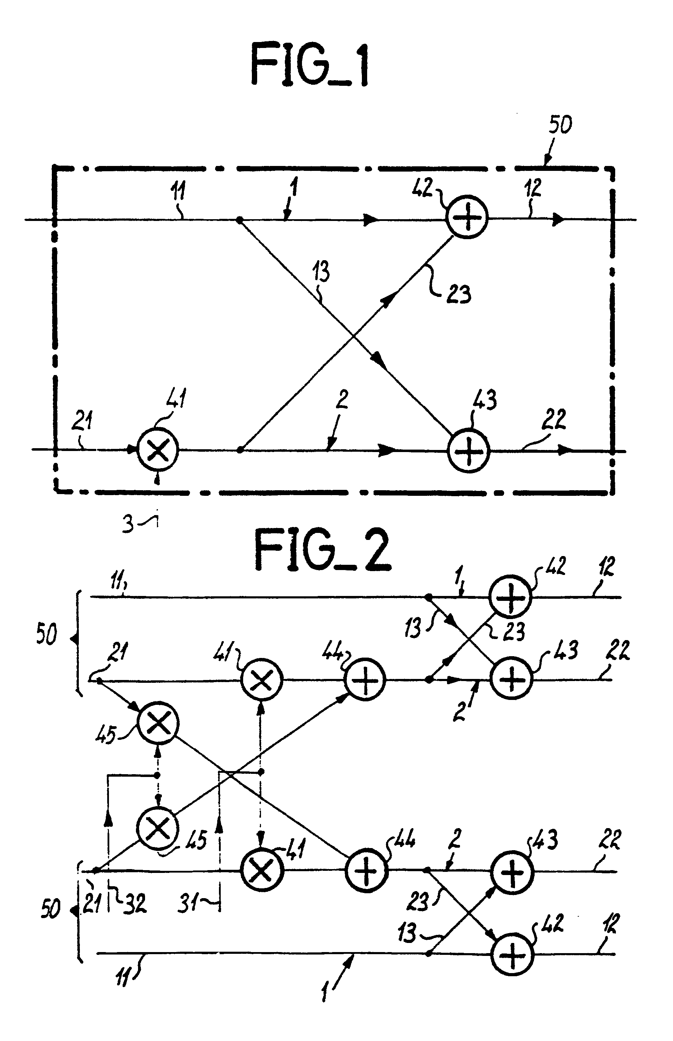

Dans la demande de brevet européen publiée le 12 février 1986 sous le numéro 0171305, la Demanderesse a décrit un circuit de calcul de la transformée de Fourier discrète particulièrement avantageux. La structure de ce circuit de calcul est rappelée ci-dessous en référence aux figures 1 à 5. Ce circuit permet d'effectuer, sur commande, la pondération, par exemple avant le calcul de la transformée de Fourier. Pour une suite discrète, la pondération est effectuée en multipliant les termes de la suite par des coefficients de pondération par exemple stockés dans une mémoire morte (ROM en terminologie anglo-saxonne). Avantageusement, la mémoire morte contient plusieurs jeux de coefficients de façon à pouvoir choisir la pondération désirée.

Le circuit décrit dans cette demande de brevet européen comporte un circuit effectuant, pour une suite de nombres, uncalcul numérique de transformation appelé transformée de Fourier discrète, nommée TFD dans la suite de ce brevet. Pour chaque temps, les valeurs de la TFD sont sensiblement égales à la valeur de la transformée de Fourier.

Soit $f$ une suite de nombres $f_n$, $n$ étant le rang du nombre $f_n$ dans la suite $f$.

La suite $f$ est par exemple la suite de N valeurs numériques d'une fonction qu'on a échantillonnée.

$F_k$, TFD de $f_n$ est définie par :

$$F_k = \sum_{n=0}^{N-1} f_n \, W^{nk} \qquad \text{avec } W = e^{-j(2\pi/N)}$$

Le dispositif décrit se propose de décomposer un calcul complexe en des successions de calculs simples. Pour cela le dispositif utilise une structure en papillon illustrée sur la figure 1.

L'algorithme de calcul de TFD est celui de la décimation en temps :

Si N est paire, la suite $f$ peut être décomposée en une suite $g$ des termes de $f$ de coefficient pair et en une suite $h$ des termes de la suite $f$ de coefficient impair. Pour $0 < L < \frac{N}{2} - 1$

$$g_L = f_{2L}$$
$$h_L = f_{2L+1}$$

Soit $G_k$ et $H_k$ les TFD respectivement de $g_L$ et de $h_L$

EP 0 245 152 B1

$$G_k = \sum_{L=0}^{L=\frac{N}{2}-1} g_L (W^2)^{Lk}$$

$$H_k = \sum_{L=0}^{L=\frac{N}{2}-1} h_L (W^2)^{Lk}$$

Alors

$$F_k = \begin{cases} G_k + W^k H_k & \text{pour } 0 \leqslant k \leqslant \frac{N}{2} - 1 \\ G_{k-N/2} + W^k H_{k-N/2} & \text{pour } \frac{N}{2} \leqslant k \leqslant N - 1 \end{cases} \tag{1}$$

Notamment pour deux indices dont la différence est égale à $\frac{N}{2}$ on a :

$$W^{m+N/2} = - W^m$$

$$F_m = G_m + W^m H_m$$

$$\text{et} \quad F_{m+\frac{N}{2}} = G_m + W^{m+\frac{N}{2}} H_m = G_m - W^m H_m$$

Il est souvent indispensable de vérifier la validité des résultats calculés. Cela est particulièrement important dans le cas d'utilisation du dispositif de calcul en milieu hostile. Une solution consiste par exemple à doubler le nombre de circuit de calcul et de leur associer un comparateur qui ne valide le calcul que si les résultats calculés par les deux circuits sont identiques. Cette démarche s'avère très coûteuse. Le dispositif selon l'invention permet de vérifier le résultat de calcul de la transformée de Fourier pour un taux d'erreur prédéterminé. Pour cela le dispositif vérifie le résultat du calcul de la transformée de Fourier à l'aide du théorème de Parseval. Lors d'un test, le circuit selon l'invention effectue le calcul de Parseval. Le résultat calculé par l'opérateur est validé uniquement en cas d'égalité des deux membres de l'équation de Parseval. L'utilisation du même processeur pour le calcul de la transformée de Fourier et pour la vérification permet de ne pas augmenter sensiblement la complexité du processeur.

La Demanderesse a déposé le 6 novembre 1984 une demande de brevet française publiée le 9 mai 1986 sous le N° 2 572 820 décrivant le test en ligne d'un circuit de calcul de la transformée de Fourier discrète comportant un circuit de calcul spécial de test par la formule de Parseval.

La Demanderesse a déposé, le 4 novembre 1985, en revendiquant la priorité de la demande de brevet française la demande de brevet européen N° 85402113.6 désignant l'Allemagne, les Pays-Bas, la Grande-Bretagne et l'Italie.

Ladite demande européenne constitue un art antérieur pour la nouveauté selon l'article 54(3) de la CBE.

Le dispositif décrit dans la demande précitée utilise des opérateurs spécialement destinés au test. Ainsi, le test n'induit pas de retard dans le calcul. Par contre, le circuit étant plus grand est plus complexe à réaliser.

Par contre dans le dispositif selon l'invention on utilise les opérateurs destinés au calcul de la transformée de Fourier pour le test. Ceci augmente le temps de calcul quand le test est réalisé. Par contre, ainsi on réduit la complexité du dispositif de calcul complet effectuant la transformée de Fourier et le test.

L'invention a donc plus précisément pour objet une utilisation d'un processeur de calcul de la transformée de Fourier discrète (TFD), pour la vérification en ligne de ladite transformée de Fourier ainsi calculée, telle que définie dans les revendications.

L'invention sera mieux comprise au moyen de la description ci-après et des figures annexées données

3

comme des exemples non limitatifs parmi lesquels :

- la figure 1 illustre un cycle de calcul appelé papillon TFD pour nombres réels ;
- la figure 2 illustre un papillon TFD pour nombres complexes ;
- les figures 3 à 5 illustrent les chemins de données ;
- la figure 6 illustre un exemple de réalisation d'un circuit utilisé dans l'invention ;
- la figure 7 illustre un exemple de réalisation de circuit selon l'invention ;
- la figure 8 illustre un exemple de réalisation du circuit selon l'invention.

Sur les figures 1 à 8 les mêmes références désignent les mêmes éléments.

Sur les figures 1 à 8 le sens des flots de donnée est indiqué par des flèches.

Sur la figure 1, on peut voir un schéma synoptique d'un papillon TFD 50 utilisant l'algorithme de la décimation en temps. Le papillon 50 comporte une première ligne 1, avec une entrée 11 et une sortie 12 et une seconde ligne 2, avec une entrée 21 et une sortie 22. La ligne 1 comprend un additionneur 42. La ligne 2 comprend un multiplieur 41 suivi d'un additionneur 43. Les entrées du multiplieur 41 sont connectées à l'entrée 21 de la ligne 2 et à une ligne 3. Les entrées de l'additionneur 42 sont connectées à la ligne 1 d'une part et à la ligne 2 au niveau de la sortie du multiplieur 41 par une ligne 23 d'autre part. Les entrées de l'additionneur 43 sont connectées à la ligne 2 au niveau de la sortie du multiplieur 41 d'une part et à la ligne 1 en amont de l'additionneur 42 par une ligne 13 d'autre part.

Le papillon 50 illustré par la figure 1 est particulièrement bien adapté pour le calcul en décimation en temps de termes de la TFD de suites de nombres réels. La décimation en temps suppose qu'aux entrées 11 et 21 du papillon 50 se présentent les termes des suites g et h. Par contre aux sorties 12 et 22 du papillon 50 on trouve les termes ordonnés de la suite F. Le tableau suivant donne la correspondance des indices d'entrée et de sortie pour une TFD de huit termes. Celle des indices est liée par la relation dite "bit reverse" car les chiffres de poids fort et les chiffres de poids faible sont permutés dans l'écriture binaire de ces indices.

## TABLEAU I

| Indice d'entrée | | Indice de sortie | |
|---|---|---|---|
| Décimal | Binaire | Décimal | Binaire |
| 0 | 000 | 000 | 0 |
| 4 | 100 | 001 | 1 |
| 2 | 010 | 010 | 2 |
| 6 | 110 | 011 | 3 |
| 1 | 001 | 100 | 4 |
| 5 | 101 | 101 | 5 |
| 3 | 011 | 110 | 6 |
| 7 | 111 | 111 | 7 |

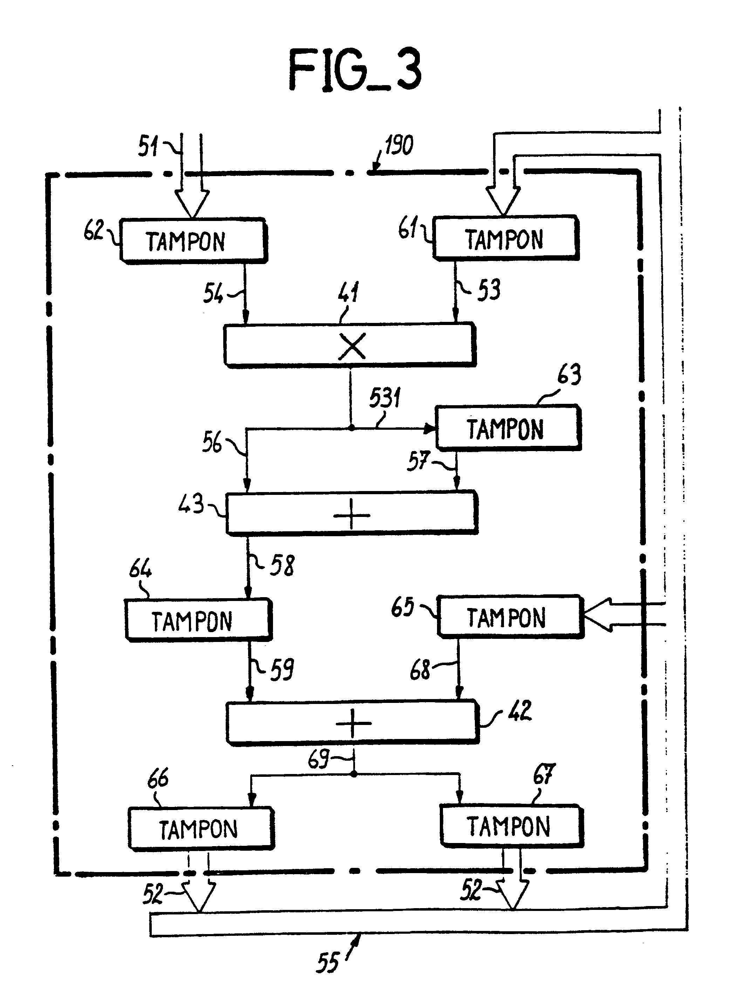

Sur la figure 2, on peut voir un ensemble de deux papillons 50 susceptibles d'effectuer le calcul de TFD sur des suites de nombres complexes. Chacun des papillons 50 comporte un additionneur 44 dont une des entrées est connectée à la sortie des multiplieurs 41. L'autre entrée desdits additionneurs 44 est connectée via des multiplieurs 45 aux entrées 21 des papillons complémentaires. D'autre part, les entrées des multiplieurs 45 sont connectées à une ligne 32. Les entrées des multiplieurs 41 sont connectées à une ligne 31. Les lignes 31 et 32 correspondent à la ligne 3 de la figure 1.

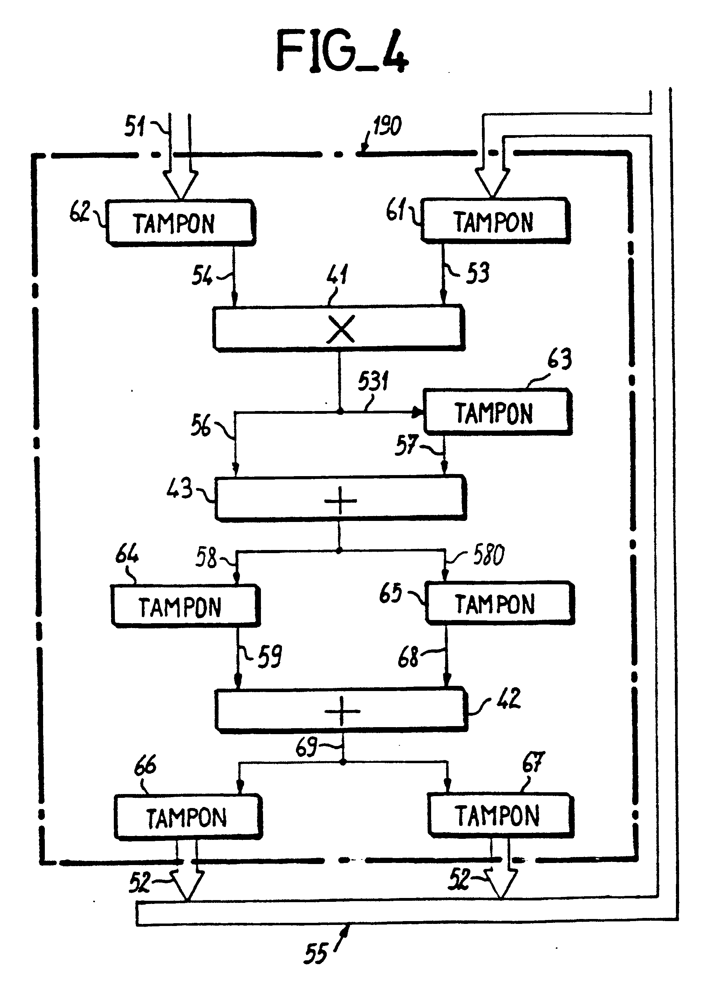

Sur la figure 3, on peut voir le chemin de donnée pour le calcul de la TFD dans un exemple de processeur selon l'invention. Le dispositif 190 des figures 3, 4 et 5 comporte le multiplieur 41, les additionneurs 42 et 43 ainsi que des mémoires tampon 61 à 67. Les mémoires tampon 61 à 67 assurent le retard d'un cycle d'horloge nécessaire au synchronisme de la structure pipe-line du processeur selon l'invention ainsi qu'une resynchronisation par rapport aux impulsions d'horloge. Un bus de donnée 55 relie le dispositif 190 des figures 3, 4 et 5 à une mémoire non représentée. L'entrée de la mémoire tampon 61

4

est reliée au bus 55. L'entrée de la mémoire tampon 62 est reliée par un bus 51 à une mémoire de coefficient de la TFD non représentée. Les sorties des mémoires tampon 61 et 62 sont reliées aux entrées du multiplieur 41 respectivement par les lignes 53 et 54. La sortie du multiplieur 41 est reliée d'une part par une ligne 531 à la mémoire tampon 63 et d'autre part par une ligne 56 à une entrée de l'additionneur 43. La sortie de la mémoire tampon 63 est reliée à l'autre entrée de l'additionneur 43 par une ligne 57. La sortie de l'additionneur 43 est reliée à l'entrée de la mémoire tampon 64 par une ligne 58. La sortie de la mémoire tampon 64 est reliée à une entrée de l'additionneur 42 par une ligne 59. L'entrée de la mémoire tampon 65 est reliée au bus 55. La sortie de la mémoire tampon 65 est reliée à l'autre entrée de l'additionneur 42 par une ligne 68. La sortie de l'additionneur 42 est reliée aux entrées des mémoires tampon 66 et 67 par une ligne 69. Les sorties 52 des mémoires tampon 66 et 67 sont reliées au bus 55.

Sur la figure 4, on peut voir les chemins de donnée pour le calcul de la pondération dans un exemple de processeur selon l'invention. L'entrée de la mémoire tampon 61 est reliée au bus 55. L'entrée de la mémoire tampon 62 est reliée par un bus 51 à une mémoire des coefficients de la TDF non représentée. Les sorties des mémoires tampon 61 et 62 sont reliées aux entrées du multiplieur 41 respectivement à la ligne 53 et 54. La sortie du multiplieur 41 est reliée d'une part à la ligne 531 à une mémoire tampon 63 et d'autre part à la ligne 56 à une entrée de l'additionneur 43. La sortie de la mémoire tampon 63 est reliée à l'autre entrée de l'additionneur 43 par la ligne 57. La sortie de l'additionneur 43 est reliée d'une part à l'entrée de la mémoire tampon 65 par la ligne 580 et d'autre part à l'entrée de la mémoire tampon 64 par une ligne 58. La sortie de la mémoire tampon 65 est reliée à une entrée de l'additionneur 42 par une ligne 68. La sortie de la mémoire tampon 64 est reliée à l'autre entrée de l'additionneur 42 par une ligne 59. La sortie de l'additionneur 42 est reliée aux entrées des mémoires tampon 66 et 67 par la ligne 69. Les sorties 52 des mémoires tampon 66 et 67 sont reliées au bus 55.

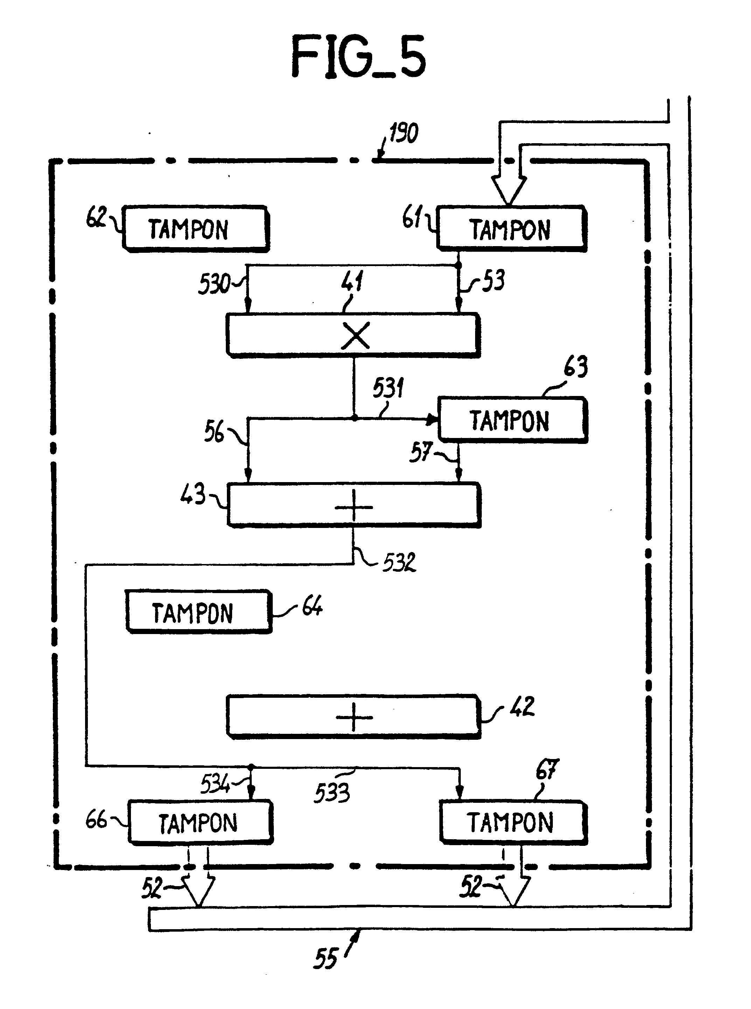

Sur la figure 5, on peut voir le chemin de donnée pour le calcul du module d'un exemple de processeur 190 selon l'invention. Les mémoires tampon 62 et 64 ainsi que l'additionneur 42 du dispositif 190 ne sont pas connectés pour le calcul du module. L'entrée de la mémoire tampon 61 est reliée au bus 55. La sortie de la mémoire tampon 61 est reliée à une première entrée du multiplieur 41 par une ligne 53 à une seconde entrée du multiplieur 41 par une ligne 530. La sortie du multiplieur 41 est reliée d'une part à l'entrée de la mémoire tampon 63 par une ligne 531 et d'autre part à une entrée de l'additionneur 43 par la ligne 56. La sortie de la mémoire tampon 63 est reliée à l'autre entrée de l'additionneur 43 par la ligne 57. La sortie de l'additionneur 43 est reliée aux entrées des mémoires tampon 66 et 67 respectivement par les lignes 534 et 533. Les sorties 52 des mémoires tampon 66 et 67 sont reliées au bus 55.

Le dispositif selon l'invention décrit ci-après vérifie le bon fonctionnement du circuit calculant la TFD en utilisant le théorème de Parseval plus simple à mettre en oeuvre que l'algorithme de calcul de la TFD. De plus, la fiabilité du système complet est accrue par l'indépendance des calculs de vérification par rapport aux calculs à vérifier.

Le théorème de Parseval indique que la puissance du signal analysé est égale à la somme des puissances de ses harmoniques. Pour la TFD le théorème de Parseval s'exprime par la formule :

$$\sum_{n=0}^{N-1} |x(n)|^2 = \frac{1}{N} \sum_{k=0}^{N-1} |X(k)|^2 \qquad (I)$$

$x(n)$ étant le $n^{ième}$ élément de la séquence d'entrée du processeur TFD et $X(k)$ étant le $k^{ième}$ élément calculé par le processeur TFD.

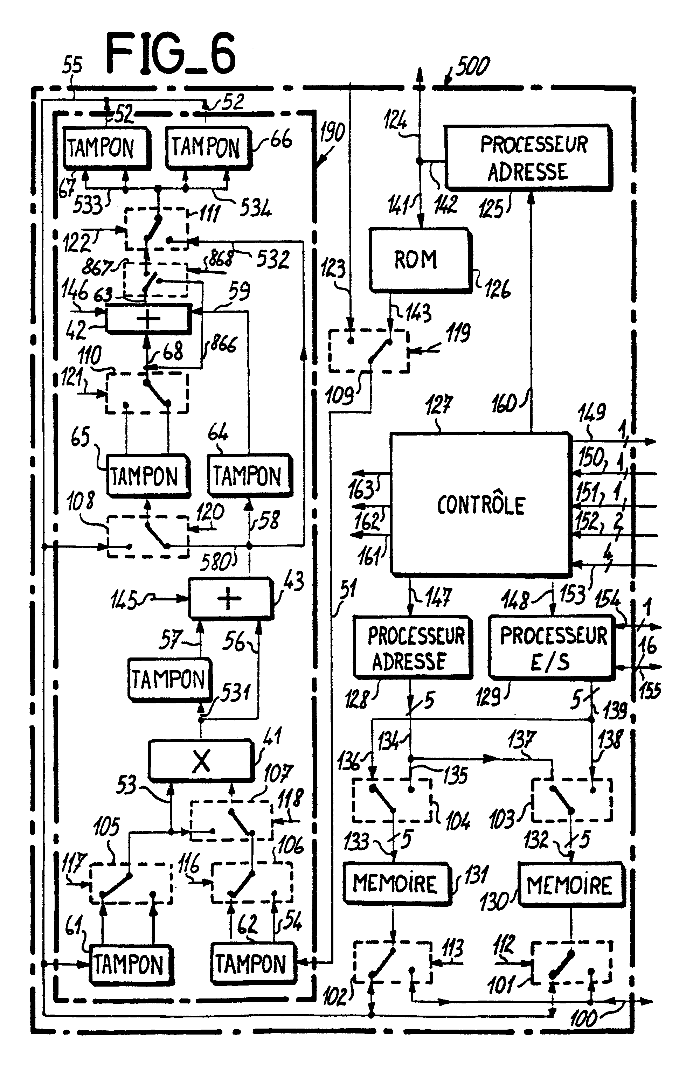

Le calcul d'une TFD de N point par l'opérateur 500 de la figure 6 exige de parcourir $\frac{N}{2} \log_2 N$ papillons FFT de la figure 1, ce qui correspond à $2N \log_2 N$ multiplications et à $3N \log_2 N$ additions. Par contre le calcul de vérification du résultat utilisant le théorème de Parseval exige $2N$ multiplications et $2(N-1)$ additions. Ainsi le calcul de la TFD exige $\log_2 N$ fois le nombre de multiplications et

$$\frac{3N \log_2 N}{2(N-1)}$$

fois le nombre d'additions de la vérification de ce calcul.

Dans un exemple de réalisation l'opérateur 500 de la figure 6 effectue des TFD sur N points, N variant entre 8 et 8000. Ainsi, dans le cas le moins favorable le dispositif de vérification de la TFD réalise trois fois moins de multiplications et 5,4 fois moins d'additions. L'utilisation d'un additionneur 42 et un multiplieur 41 en commun pour le calcul de la TFD et de la vérification permet de réduire la complexité du circuit ainsi que sa surface.

Sur la figure 6, on peut voir un exemple de réalisation particulièrement performant du processeur 500 de calcul de la TFD selon l'invention. Le processeur 500 permet de choisir le calcul de la TFD, de la pondération suivie du calcul de TFD ou du calcul des modules, ou les calculs des membres de l'équation de Parseval :

$$\sum_{n=0}^{N-1} |x(n)|^2 = \frac{1}{N} \sum_{k=0}^{N-1} |X(k)|^2 \quad (I)$$

Dans l'exemple de réalisation non limitatif de la figure 6, les moyens de comparaison des deux membres de l'équation I sont extérieurs au processeur 500 et ne sont pas illustrés. Il sera évident pour l'homme de l'art d'après l'enseignement contenu dans ce brevet de réaliser un processeur exécutant d'abord les corrélations, la TFD suivie d'un calcul de pondération. Le processeur 500 comporte le dispositif 190 des figures 3, 4 et 5, deux mémoires vives 130 et 131 (RAM en terminologie anglo-saxonne) un processeur des entrée-sortie 129, un processeur 128 de calcul d'adresse des mémoires 130 et 131, une mémoire des coefficients 126 associée à un processeur d'adresse 125 ainsi qu'un circuit 127 logique de contrôle du processeur 500. La présence des mémoires internes au processeur 500 ainsi que de leur processeur d'adresse et d'entrées-sorties permet d'augmenter la vitesse de traitement du processeur. Les chemins de donnée désirés dans le processeur 500 sont choisis grâce à des commutateurs 101, 102, 103, 104, 105, 106, 107, 108, 109, 110, 111 et 867 commandés respectivement par les signaux 112, 113, 114, 115, 116, 117, 118, 119, 120, 121, 122 et 868. Les signaux de commande des commutateurs sont émis par l'unité de contrôle 127 par la ligne 161.

Le dispositif 190, le commutateur 105 et 106 permettent de choisir les sorties des mémoires tampon 61 et 62. La sortie du commutateur 106 est connectée au commutateur 107 permettant de choisir à l'une des entrées du multiplieur 41 entre la sortie de la mémoire 62 et celle de la mémoire 61. Le commutateur 108 permet de choisir de connecter l'entrée de la mémoire tampon 65 au bus 55 ou à la sortie de l'additionneur 43. Le commutateur 110 permet de choisir une des deux sorties de la mémoire tampon 65. Le commutateur 867 permet de connecter la sortie de l'additionneur 42 sur l'une de ses entrées par l'intermédiaire d'une ligne 866. Ainsi, l'additionneur 42 est susceptible de calculer les sommes nécessaires à la vérification du bon fonctionnement du circuit par le théorème de Parseval. Dans une variante de réalisation du dispositif selon l'invention l'additionneur 42 est un additionneur accumulateur. Le commutateur 111 permet de choisir d'envoyer les informations présentes à la sortie de l'additionneur 42 à la mémoire tampon 66 ou 67.

Dans l'exemple de réalisation de la figure 6 les mémoires 130 et 131 ont une taille réduite. Ainsi un bus de donnée 100 les relie à une mémoire externe non représentée. Dans cette dernière mémoire est stockée la suite dont on veut calculer la TFD. Les commutateurs 101 et 102 permettent de choisir entre l'écriture des données à partir du bus 100 ou la lecture des données en mémoire et l'envoie sur le bus 55 des mémoires respectivement 130 et 131. Le commutateur 101 reçoit un signal de commande 112 et le commutateur 102 un signal de commande 113. Les mémoires 130 et 131 comportent respectivement un bus d'adresse 132 et 133. Dans l'exemple de réalisation illustré par la figure 6, la Demanderesse a utilisé des bus d'adresse de cinq bits correspondant à la capacité des mémoires 130 et 131. Les bus d'adresses 132 et 133 sont reliés au processeur des entrées-sorties 129 en mode écriture ou au processeur d'adresse 128 en mode lecture. La sélection est opérée par les mémoires 130 et 131 respectivement par le commutateur 103 et 104 qui reçoivent respectivement les signaux de commande 114 et 115. Le processeur d'entrée-sortie 129 est relié au commutateur par tout d'abord une ligne 139 reliée elle-même au commutateur 103 par une ligne 138 et au commutateur 104 par une ligne 136. Le processeur d'adresse 128 est relié aux commutateurs 103 et 104 respectivement par les lignes 137 et 135 reliées à la ligne 134. Le processeur entrées-sorties 129 est relié par la ligne 155 à la mémoire externe non représentée, sur laquelle il envoie par exemple sur seize bits l'adresse à lire dans ladite mémoire externe.

En mode lecture les mémoires 130 et 131 sont reliées au bus de donnée 55 afin de fournir au dispositif 190 les données à traiter.

La mémoire 126 contient les coefficients W de la TFD. Elle est connectée au bus 51 par l'intermédiaire de la ligne 143 et du commutateur 109. Le processeur d'adresse 125 de la mémoire 126 est relié à son bus d'adresse 141 par une ligne 142. La mémoire 126 est par exemple une mémoire morte (ROM en terminologie anglo-saxonne) ou mémoire morte programmable (PROM en terminologie anglo-saxonne). Avantageusement le dispositif selon l'invention permet le changement des coefficients W de la TFD. Les jeux supplémentaires des coefficients sont stockés dans une mémoire externe du processeur 500. Le processeur d'adresse 125 permet l'adressage de cette mémoire par la ligne 142 et le bus 124. Les données de cette mémoire sont présentes sur le bus 123 qui est connecté au bus 51 par l'intermédiaire du commutateur 109. Le processeur d'entrée-sortie 129 est connecté à une horloge d'entrée-sortie externe. Toutes les horloges internes au processeur 500 sont synchronisées par le dispositif de contrôle 127 au moyen de la ligne 162. Suivant le type de calcul à exécuter les additionneurs 43 et 42 doivent exécuter des additions ou des soustractions. La commutation entre ces deux fonctions est effectuée par les signaux 145 et 146 reçus à partir du dispositif de contrôle 127 par l'intermédiaire de la ligne 163. Le nombre N des termes de la suite f dont on veut calculer la TFD est donné par la ligne 153. L'ordre d'effectuer une pondération est donné au dispositif de contrôle 127 par la ligne 152 par exemple sur un bit. L'ordre de calculer le module est donné au dispositif de contrôle 127 par la ligne 151 par exemple sur un bit. L'ordre de commencement de calcul est donné au dispositif de contrôle 127 par la ligne 150 par exemple sur une ligne transmettant un bit. La fin des calculs est signalé par un dispositif de contrôle 127 par la ligne 149 par exemple sur un bit. Pour ne pas encombrer la figure les lignes 161, 162 et 163 ne sont pas représentées.

La mémoire 126 comporte les coefficients w de la TFD qui sont par exemple les racines $N^{\text{ièmes}}$ de l'unité. En fait pour tous les calculs c'est le coefficient appartenant à l'intervalle $0,\pi$ sont nécessaires. Dans une variante de réalisation la mémoire 126 ne contient que les coefficients appartenant à l'intervalle $0,\pi/4$ ; les autres coefficients étant déduits par des régles classiques de trigonométries. La mémoire 126 contient le coefficient de la TFD de taille maximale que l'on veut calculer, par exemple 4096 ; le coefficient d'une TFD de taille inférieure constitue un sous-ensemble des coefficients de la TFD de la taille maximale.

Dans un exemple de réalisation le multiplieur 41 est un multiplieur opérant sur des données en format fixe par exemple de seize bits comportant huit étages.

Dans le second exemple de réalisation permettant d'assurer la multiplication de nombre en format à virgules flottantes le multiplieur comporte un circuit de traitement de l'exposant fournissant l'exposant du résultat.

Dans le troisième exemple de réalisation le multiplieur 41 comporte un dispositif permettant de donner le poids respectif aux bits au cas ou le format n'est pas normalisé.

Les additionneurs 43 et 42 traitent des opérands en format à virgules flottantes avec six bits d'exposant et dix huit bits de mantisse. Avantageusement les additionneurs comportent trois étages pipe-line comportant un étage de dénormalisation, un étage additionneur et un étage de rénormalisation.

Comme il est montré par la formule 1 le calcul par le dispositif selon l'invention d'une TFD consiste à subdiviser en groupes indépendants de taille réduite en exécutant toujours les papillons TFD des figures 1 ou 2. Le nombre de ces papillons d'un groupe est donc fixé par la taille du tableau de donnée d'entrée. Par exemple pour une TFD de trente-deux termes on effectue deux étapes : une première avec quatre groupes de huit termes et une seconde avec huit groupes de quatre termes. Ainsi on effectue successivement le transfert un par un des quatre tableaux de donnée des huit termes puis des huit tableaux de donnée de quatre points dans les mémoires 130 et 131. Une fois le calcul exécuté les tableaux résultant sont transférés dans la mémoire externe non représentée aux mêmes adresses que les tableaux d'entrée. On dit alors que le calcul s'effectue "en place". La mémoire interne de calcul est partagée en deux blocs 130 et 131 assurant alternativement le rôle des mémoires d'entrée-sortie et celui de la mémoire de calcul. Avantageusement le bus 100 a une capacité permettant l'accès des données complexes. Par exemple de l'opération élémentaire nécessitant quatre multiplications réelles et six additions réelles la mémoire par exemple 130 va fournir un dispositif 190 de données complexes et recevoir également deux données complexes les coefficients sont issus par exemple de la mémoire 126.

Dans l'exemple de réalisation représenté sur la figure 6 les coefficients de pondération sont contenus dans une mémoire externe au processeur 500. Le processeur d'adresse 125 calcule ces coefficients et transmet par la ligne 142 au bus 124. Les coefficients obtenus sont envoyés dans la mémoire externe non représentée par le bus de donnée 123 au bus 51. Etant donné que chaque terme dont on veut calculer la TFD doit être multiplié par un coefficient de même indice dans un exemple de réalisation les calculs des coefficients sont effectués par un compteur binaire. Les coefficients sont présents sur le bus 123 de façon séquentielle.

Dans un autre exemple de réalisation les coefficients de la pondération sont symétriques par rapport aux termes d'indice N/2. Dans ce cas il est possible que la mémoire 126 ne contient donc N/2 premier coefficient de la loi de pondération. Dans ce cas un dispositif transformant les bits d'adresse à partir du coefficient de rang N/2 est adjoint sur le bus d'adresse 141 de la mémoire 126.

Si la mémoire 126 ne contient que les coefficients de l'intervalle $0,\pi/4$ un décodeur non représenté sur la figure 6 est inséré avant la mémoire 126, ce décodeur assure l'adressage de la mémoire 126 ainsi que l'adressage du dispositif 190 permettant le changement de signe conforme aux formules trigonométriques permettant de passer de l'intervalle [0,$\pi$/4] à l'intervalle [0,$\pi$].

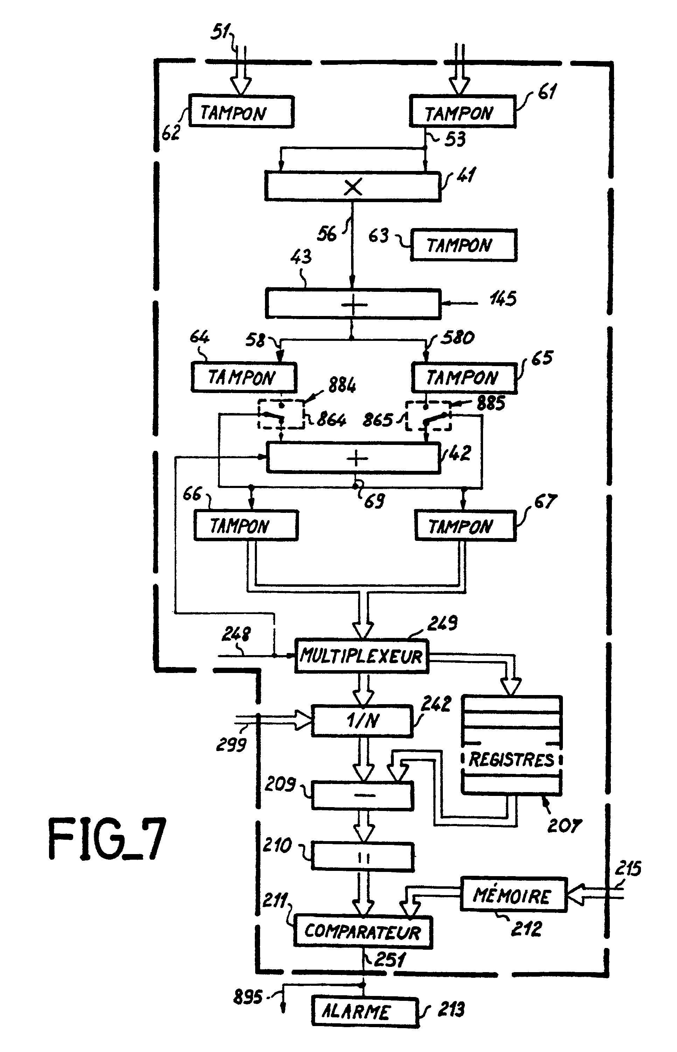

Sur la figure 7, on peut voir les chemins de données pour les calculs des membres de l'équation de Parseval.

Une des mémoires tampons, par exemple 61 est reliée par la ligne 53 aux entrées du multiplieur 41. La sortie du multiplieur 41 est reliée à un additionneur, par exemple l'additionneur 42. Dans l'exemple de réalisation illustré sur la figure 7, la sortie du multiplieur 41 est reliée aux entrées de l'additionneur 42 par l'intermédiaire d'une ligne 36, de l'additionneur 43, des lignes 58 et 580, des mémoires tampon 64 et 65 et des commutateurs 864 et 865.

Dans cette réalisation du dispositif selon l'invention l'additionneur 43 peut être rendu transparent sur commande 145 reçue du circuit de contrôle 127.

Les commutateurs 864 permettent de relier soit la sortie de l'additionneur 42 soit une mémoire tampon 64 à la première entrée de l'additionneur 42.

Le commutateur 865 permet de relier soit la sortie de l'additionneur 42 soit la mémoire tampon 65 à une seconde entrée de l'additionneur 42.

Les commutateurs 864 et 865 sont contrôlés par des signaux de commande référencés respectivement 884 et 885.

Dans une variante de réalisation non représentée l'additionneur 42 est un additionneur accumulateur. Dans ce cas, les commutateurs 864 et 865 ne sont plus nécessaires.

L'additionneur 42 est connecté à un multiplexeur 249 par exemple par l'intermédiaire des mémoires tampon 66 et 67. Le multiplexeur 249 transmet la valeur de l'additionneur 42 alternativement au diviseur 242 ou au registre 207.

Le diviseur 242 divise la valeur reçue par N. La valeur N, égale au nombre de point sur lequel est effectuée la TFD, est transmise au diviseur 242 par le bus 299. Les registres 207 retardent le signal d'un nombre de temps prédéterminé. Par exemple, si le calcul des vérifications effectué par l'opérateur 214 est trois fois plus rapide que le calcul de la TFD par l'opérateur 500 de la figure 6, les registres 207 comportent trois registres connectés en série introduisant donc un retard de trois cycles d'horloge.

La sortie des registres 207 et du diviseur 242 reliée aux deux entrées du soustracteur 209. Le soustracteur 209 calcule la différence entre les deux membres de l'égalité (I) du théorème de Parseval. Le soustracteur 209 est connecté à l'opérateur 210 qui calcule la valeur absolue de la différence calculée par le soustracteur 209.

L'opérateur 210 d'une part et la mémoire 212 d'autre part sont connectés au comparateur 211. La mémoire 212 contient la valeur d'erreur maximale admissible dans le calcul de la TFD.

Avantageusement, la mémoire 212 est une mémoire vive (RAM en terminologie anglo-saxonne). La valeur stockée dans la mémoire 212 est par exemple chargée par un bus 215. Si la différence entre les deux membres de l'égalité de Parseval (I) est supérieure à la tolérance stockée dans la mémoire 211 le comparateur 211 déclenche un dispositif d'alarme 213 par l'intermédiaire d'une ligne 251.

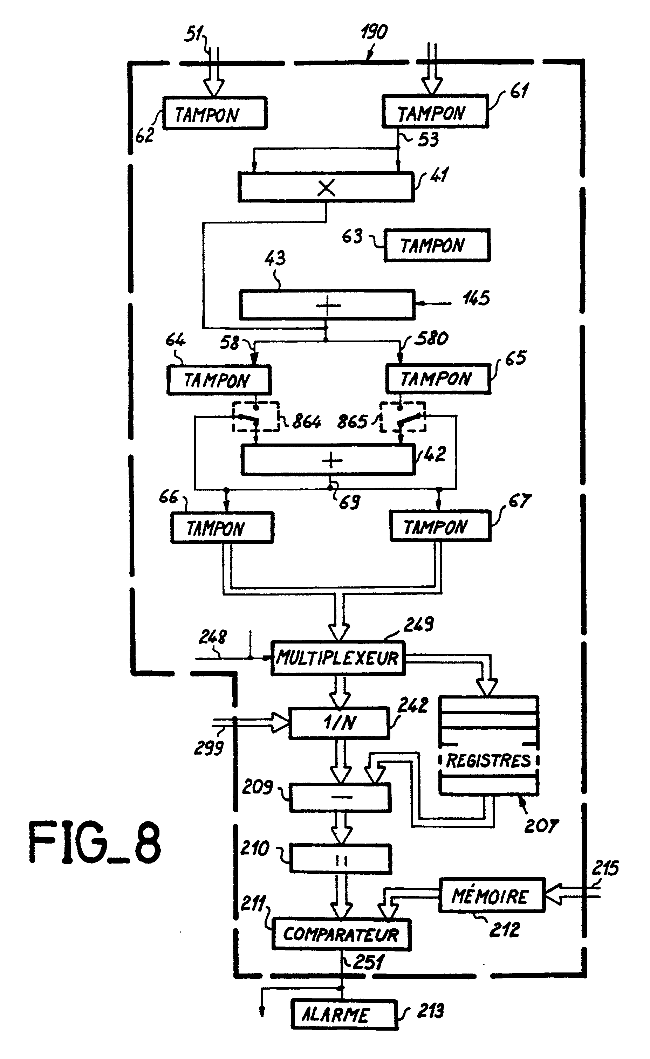

Il est bien entendu que les processeurs des figures 7 et 8 sont donnés à titre d'exemples non limitatifs. Par exemple le processeur 210 peut être absent dans une liaison parallèle si l'on ne conserve pas le signe. De même le diviseur 242 effectuant une division par une puissance de deux peut être remplacé par un câblage adéquat de l'opérateur 190.

Si, lors d'un test on détecte la défaillance d'un processeur selon l'invention diverses mesures peuvent être prises pour minimiser les conséquences de cette défaillance comme par exemple :
- déconnection et éventuellement, si cela est possible remplacement du processeur défaillant ;
- reconfiguration d'un système multiprocesseur, les processeurs dont le test n'a pas révélé de défaillance prenant en charge les calculs qui auraient dus être exécutés par le processeur défaillant.

La reconfiguration du système est obtenue, par exemple, par un signal de commande 895 émis à partir de la ligne 251.

Dans une première variante de réalisation le dispositif selon l'invention est réalisé sous forme de circuits imprimés. Avantageusement le dispositif selon l'invention comporte des circuits intégrés. Avantageusement ces circuits intégrés sont en technologie en arséniure de gallium assurant une grande rapidité de traitement.

Dans une seconde variante du dispositif selon l'invention à réaliser sous forme de circuit intégré. Avantageusement ce circuit intégré est réalisé en technologie en arséniure de gallium.


**Revendications**

1. Utilisation d'un processeur de calcul de la transformée de Fourier discrète (TFD), se basant sur une structure de calcul en papillon pour calculer N éléments de résultats X(k), (avec $0 \leq k \leq N-1$) à partir d'une suite de N signaux d'entrée x(n) (avec $0 \leq n \leq N-1$) et comprenant au moins un additionneur (42 et/ou 43) et un multiplieur (41), pour la vérification en ligne de ladite transformée de Fourier ainsi calculée, caractérisée en ce que, pour vérifier la validité des résultats obtenus, on utilise le théorème de Parseval indiquant que la puissance du signal analysé est égale à la somme des puissances de ses harmoniques:

$$\sum_{n=0}^{N-1} |x(n)|^2 = \frac{1}{N} \sum_{k=0}^{N-1} |X(k)|^2$$

et en ce que ledit processeur comporte en outre:
- des premiers moyens (127, 107, 864, 865) pour permettre au multiplicateur (41) d'effectuer des élévations au carré et à un additionneur (42) d'effectuer la somme desdits carrés;
- des seconds moyens de comparaison (249, 242, 207, 209 à 212) émettant un signal électrique (251) si la valeur de la différence des deux membres de l'équation de Parseval est supérieure à une valeur de tolérance prédéterminée.

2. Utilisation d'un processeur de calcul de la transformée de Fourier discrète selon la revendication 1, caractérisée en ce que lesdits premiers moyens comprennent des commutateurs (864, 865) permettant de relier une entrée dudit additionneur (42) soit à sa sortie pour former un accumulateur pour calculer les sommes de carrés de l'équation de Parseval, soit à une mémoire tampon (64, 65) pour les calculs de transformée de Fourier.

3. Utilisation d'un processeur de calcul de la transformée de Fourier discrète selon l'une des revendications 1 ou 2, caractérisée en ce que lesdits seconds moyens comprennent:
- un soustracteur (209);
- un diviseur par N (242) connecté à une première entrée du soustracteur;
- une série de registres (207) induisant un retard et connectée à la seconde entrée du soustracteur (209);
- un multiplexeur (249) dont l'entrée est reliée audit additionneur (42) lors des opérations de vérification de la TFD et dont les deux sorties sont reliées respectivement au diviseur (242) et aux registres (207), pour appliquer auxdits registres la valeur de la puissance du signal d'entrée et au diviseur la somme des puissances des harmoniques; et
- un comparateur (211) pour comparer la valeur absolue de la différence fournie par ledit soustracteur (209) à ladite valeur de tolérance et pour fournir ledit signal électrique (251) si la valeur de ladite différence est supérieure à la valeur de tolérance.

## Claims

1. The use of a processor for calculating the discrete Fourier transform (TFD) based on a calculation structure of the butterfly type in order to calculate N elements of the result X(k), (with $0 \leq k \leq N-1$) from a sequence of N input signals x(n) (with $0 \leq n \leq N-1$), and comprising at least an adder (42 and/or 43) and a multiplier (41) allowing to perform an online verification of the Fourier transform which has been calculated, characterized in that the Parseval theoreme indicating that the power of the analysed signal is equal to the sum of the powers of its harmonics

$$\sum_{n=0}^{N-1} |x(n)|^2 = \frac{1}{N} \sum_{k=0}^{N-1} |X(k)|^2$$

is used for verifying the validity of the results obtained and that said processor further includes
- first means (127, 107, 864, 865) allowing the multiplier (41) to square the input value, and allowing the adder (42) to add these square numbers up,

9

- and second comparator means (249, 242, 207, 209 to 212) supplying an electric signal (251) if the value of the difference of the two members of the Parseval equation exceeds a predetermined value of tolerance.

2. The use of a processor for calculating the discrete Fourier transform according to claim 1, characterized in that said first means comprise switches (864, 865) allowing an input of the adder (42) to be connected either to its output for constituting an accumulator and for calculating the sums of the square numbers of the Parseval equation, or to a buffer memory (64, 65) in order to calculate the Fourier transform.

3. The use of a processor for calculating the discrete Fourier transform according to claim 1 or 2, characterized in that said second means comprise
   - a subtractor (209),
   - a divide by N circuit (242) connected to a first input of the subtractor,
   - a set of registers (207) inducing a delay and connected to the second input of the subtractor (209),
   - a multiplexer (249) whose input is connected to said adder (42) during the verification operations of the discrete Fourier transform and whose first output is connected to the divider (242) while its second output is connected to the set of registers (207) in order to apply to said registers the power value of the input signal and the sum of the powers of the harmonics to the divide-by-N circuit, and
   - a comparator (211) intended to compare the absolute the difference supplied by said subtractor (209) with said tolerance value and for supplying said electric signal (251), if the value of said difference exceeds the tolerance value.

**Patentansprüche**

1. Verwendung eines Prozessors zur Berechnung der diskreten Fouriertransformierten (TFD), die auf einer Rechenstruktur vom Schmetterlingstyp beruht, um N Ergebniselemente X(k) ausgehend von einer Folge von N Eingangssignalen x(n) zu berechnen (mit $0 \leq k \leq N-1$ und $0 \leq n \leq N-1$), mit mindestens einem Addierer (42 und/oder 43) und einem Multiplizierer (41) für die Online-Verifizierung der so berechneten Fouriertransformierten, dadurch gekennzeichnet, daß zur Verifizierung der Gültigkeit der erhaltenen Ergebnisse das Parsevaltheorem verwendet wird, das angibt, daß die Leistung des analysierten Signals gleich der Summe der Leistungen seiner Harmonischen ist, nämlich

$$\sum_{n=0}^{N-1} |x(n)|^2 = \frac{1}{N} \sum_{k=0}^{N-1} |X(k)|^2$$

und daß der Prozessor außerdem
   - erste Mittel (127, 107, 864, 865), mit deren Hilfe der Multiplizierer (41) eine Quadrierung und der Addierer (42) eine Summierung dieser Quadratzahlen durchführen kann,
   - und zweite Vergleichsmittel (249, 242, 207, 209 bis 212) aufweist, die ein elektrisches Signal (251) aussenden, wenn der Wert der Differenz der beiden Glieder der Parsevalgleichung größer als ein vorgegebener Toleranzwert ist.

2. Verwendung eines Prozessors zur Berechnung der diskreten Fouriertransformierten nach Anspruch 1, dadurch gekennzeichnet, daß die ersten Mittel Umschalter (864, 865) aufweisen, die einen Eingang des Addierers (42) entweder an dessen Ausgang, um einen Akkumulator zu bilden, der die Summen der Quadratzahlen der Parsevalgleichung berechnet, oder an einen Pufferspeicher (64, 65) anschließen, um die Fouriertransformierte zu berechnen.

3. Verwendung eines Prozessors zur Berechnung der diskreten Fouriertransformierten nach einem der Ansprüche 1 oder 2, dadurch gekennzeichnet, daß die zweiten Mittel aufweisen
   - ein Subtrahierglied (209),
   - einen Teiler durch N (242), der an den ersten Eingang des Subtrahierglieds angeschlossen ist,

- eine Serie von Registern (207), die eine Verzögerung einführt und an den zweiten Eingang des Subtrahierglieds (209) angeschlossen ist,
- einen Multiplexer (249), dessen Eingang an den Addierer (42) während der Verifizieroperationen der diskreten Fouriertransformierten führt und von dessen beiden Ausgängen der eine an den Teiler (242) und der andere an die Register (207) angeschlossen ist, um den Wert der Leistung des Eingangssignals an die Register und die Summe der Leistungen der Harmonischen an den Teiler anzulegen,
- und einen Komparator (211), um den Absolutwert der vom Subtrahierglied (209) gelieferten Differenz mit dem Toleranzwert zu vergleichen und das elektrische Signal (251) auszugeben, wenn der Wert dieser Differenz größer als der Toleranzwert ist.

# FIG_1

# FIG_2

# FIG_3

# FIG_4

# FIG_5

190

62 TAMPON    61 TAMPON

530    41    53

×

531    63 TAMPON

56    57

43    +

532

TAMPON    64

+    42

534    533    67

66 TAMPON    TAMPON

52    52

55

EP 0 245 152 B1

FIG_6

16

FIG_7

FIG_8